## Europäisches Patentamt
## European Patent Office
## Office européen des brevets

(19)

(11) Numéro de publication: **0 092 460**
**B1**

(12) # FASCICULE DE BREVET EUROPÉEN

(45) Date de publication du fascicule du brevet: **23.07.86**

(51) Int. Cl.⁴: **G 06 F 7/06,** B 07 C 3/02, B 07 C 1/20

(21) Numéro de dépôt: **83400710.6**

(22) Date de dépôt: **07.04.83**

(54) **Dispositif de classement d'objets manutentionnés.**

(30) Priorité: **15.04.82 FR 8206480**

(43) Date de publication de la demande: **26.10.83 Bulletin 83/43**

(45) Mention de la délivrance du brevet: **23.07.86 Bulletin 86/30**

(84) Etats contractants désignés: **BE DE GB IT**

(56) Documents cité:
**EP-A-0 021 614**
**FR-A-1 458 234**
**GB-A-812 015**
**US-A-2 929 490**
**US-A-3 007 572**
**US-A-4 247 008**

(73) Titulaire: **Fustier, Guy, 5, rue de Reims, F-94230 Cachan (FR)**

(72) Inventeur: **Fustier, Guy, 5, rue de Reims, F-94230 Cachan (FR)**

(74) Mandataire: **Mongrédien, André, c/o BREVATOME 25, rue de Ponthieu, F-75008 Paris (FR)**

EP 0 092 460 B1

LIBER, STOCKHOLM 1986

**Description**

La présente invention concerne un dispositif de classement d'objets manutentionnés. Elle trouve une application chaque fois que l'on veut classer des objets selon les valeurs croissantes ou décroissantes d'un code qui leur est affecté, ce code pouvant traduire divers critères, une destination par exemple. Un domaine priviligié d'application de l'invention est le classement de lettres ou de chèques.

Un procédé utilisé actuellement pour obtenir le classement d'objets consiste à effectuer une cascade de tris successifs, effectués en partant des digits de plus faible poids du code numérique servant au classement.

Chaque tri consiste en une séparation du lot à classer en N sous-ensembles, si le digit sur lequel porte ce tri est susceptible de prendre N valeurs. Lorsque le lot entier a été trié selon ce digit, les N sous-ensembles sont empilés dans l'ordre des N valeurs prises et le tri suivant est alors entrepris pour le digit de poids immédiatement supérieur. Le lot est classé quand les tris successifs selon tous les digits ont été réalisés.

Ce procédé de tris successifs ne représente qu'un solution partiellement automatique au problème du classement. Il exige en effet de nombreuses manipulations intermédiaires, qui doivent être effectuées dans un ordre rigoureux, car la moindre interversion, lors de la reprise des lots triés, oblige à reprendre tout le travail.

De plus, le deuxième tri ne peut commencer que lorsque tous les objets du lot à classer ont subi le premier, ce qui interdit en grande partie tout travail préparatoire lorsque l'arrivée des objets à classer est échelonnée dans le temps.

La présente invention a pour but de remédier à ces inconvénients en permettant d'une part de supprimer toute manipulation de reprise et de classement manuels du contenu de cases de tri, et en permettant d'autre part l'incorporation rapide de lots parvenus après des lots déjà classés.

L'invention fait appel à un type de dispositif connu qui comprend essentiellement un système mécanique de rangement et un système électronique de commande. De tels dispositifs sont connus, notamment par le brevet américain US—A—4,247,008. Dans ce document, il est décrit un appareil de tri piloté par un microprocesseur qui contient une table des codes à traiter. Dans l'invention, l'organisation du dispositif est différente en ce sens que le tri n'est pas fait suivant une table préétablie mais suivant un ordre des codes (croissant ou décroissant). A cette fin, il y a duplication entre les moyens de stockage des objets et les moyens de traitement informatiques (organes et mémoires organisés en queue ou en pile); par ailleurs, le calculateur comprend une zone pour le stockage dynamique des informations indiquant pour chacun des objets stockés s'il y a inversion dans l'ordre de classement des codes, par rapport à l'objet qui le suit immédiatement dans cette queue. Dans ce calculateur des moyens sont prévus pour commander le transfert des codes d'une zone mémoire à une autre afin de ranger dans l'une d'elles les codes dans un ordre déterminé et pour commander le déplacement correspondant des objets portant ces codes. Les objets se trouvent finalement rangés dans un ordre donné par rapport audit code dans un moyen de stockage.

Les caractéristiques de l'invention apparaîtront mieux après la description qui suit, d'un exemple de réalisation donné à titre explicatif. Cette description se réfère à des dessins sur lesquels:

— la Figure 1 est un schéma synoptique du dispositif de l'invention,
— la Figure 2 est un diagramme illustrant la suite des opérations effectuées,
— la Figure 3 est un graphique montrant l'évolution du nombre de passages des objets dans le dispositif en fonction du nombre d'objets à classer,
— la Figure 4 illustre un dispositif d'entrée muni d'un moyen de retournement de lettres.

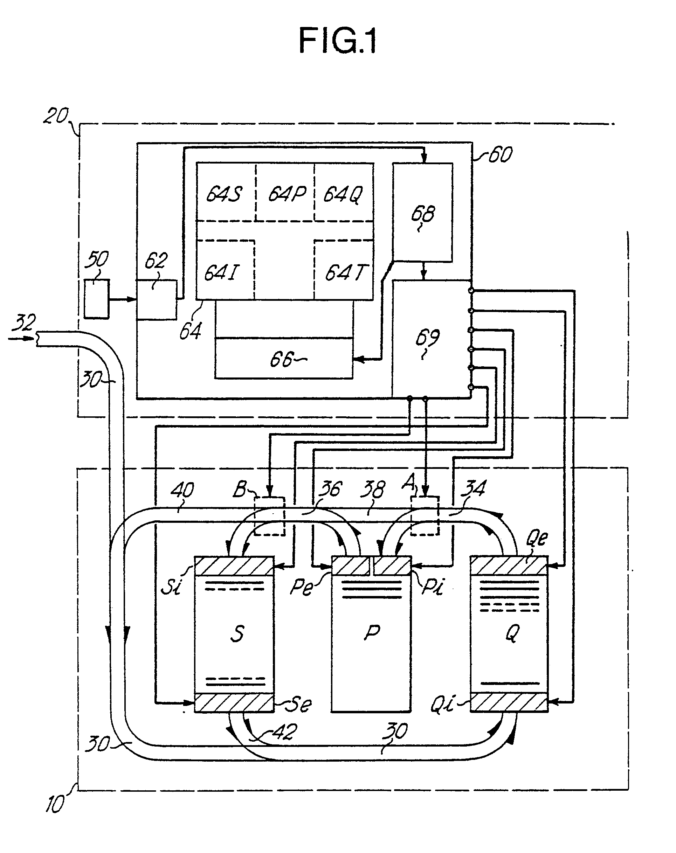

Le dispositif représenté sur la Figure 1 comprend essentiellement deux parties: un système mécanique de rangement 10 et un système électronique de commande 20. Le système mécanique de rangement 10 comprend:

A) un premier moyen de stockage d'objets Q, organisé en queue, c'est-à-dire apte à faire sortir les objets dans l'ordre où ils sont entrés; ce moyen est pourvu à cette fin d'un élément d'introduction Qi des objets dans la queue et d'un élément d'extraction Qe du premier objet de la queue,

B) un deuxième moyen de stockage d'objets P, organisé en pile, c'est-à-dire apte à faire sortir les objets dans l'ordre inverse où ils sont entrés; ce moyen est pourvu à cette fin d'un élément d'introduction Pi d'un objet sur la pile et d'un élément d'extraction Pe sur la pile,

C) un troisième moyen de stockage d'objets S, organisé en queue, comme le premier, et étant pourvu d'un élément d'introduction Si et d'un élément d'extraction Se,

D) un moyen de transport des objets à classer comprenant un certain nombre de branches et d'embranchements: une branche d'introduction 30 entre une entrée et l'élément d'introduction Qi du premier moyen de stockage Q, une branche 34 entre l'élément d'extraction Qe de ce premier moyen et l'élément d'introduction Pi du deuxième moyen de stockage P, cette branche comprenant un premier aiguillage A, une branche 36 entre le moyen d'extraction Pe du deuxième moyen de stockage P et l'élément d'introduction Si du troisième moyen de stockage S, cette branche comprenant un deuxième aiguillage B, une branche 38 comprise entre le premier aiguillage A et le second B, une branche 40 reliant le second aiguillage B à la branche d'introduction 30, une branche 42 reliant l'élément d'extraction Se du troisième moyen de stockage S à cette même branche d'introduction.

Le système électronique de commande 20 comprend: un moyen 50 de lecture d'un code numérique disposé sur les objets qui défilent sur la branche d'introduction 30 et un calculateur de commande 60 comprenant:

a) un circuit tampon d'entrée 62 relié au moyen de lecture 50,

b) une mémoire 64 apte à recevoir les codes des différents objets introduits dans le système de rangement; cette mémoire comprend notamment une première zone 64Q fonctionnant en queue selon la procédure "premier entré-premier sorti" (ou en terminologie anglosaxonne FIFO pour "First-in-first-out"), une seconde zone mémoire 64P fonctionnant en pile selon la procédure "dernier entré-premier sorti (ou en terminologie anglosaxonne LIFO pour "Last-in-first-out"), une troisième zone mémoire 64S fonctionnant en queue, une quatrième zone mémoire 64I où est stockée l'information indiquant pour chacun des codes de la zone 64Q, s'il présente une inversion par rapport au code qui le suit immédiatement et enfin une cinquième zone mémoire 64T comprenant des instructions; les codes mémorisés sont rangés dans les trois zones mémoires 64Q, 64P, 64S comme sont rangés dans les moyens Q, P et S respectivement les objets traités,

c) un circuit 66 de lecture des données et des instructions stockées dans la mémoire 64,

d) une unité logique 68 exécutant les instructions de programme pour le traitement des données et leur rangement en mémoire,

e) un circuit tampon de sortie 69 relié à l'unité logique 68 et possédant huit sorties reliées respectivement aux éléments d'introduction d'objets Qi, Pi, Si aux éléments d'extraction Qe, Pe, Se et aux deux aiguillages A et B; ce circuit délivre des signaux de commande aptes à commander les éléments en question.

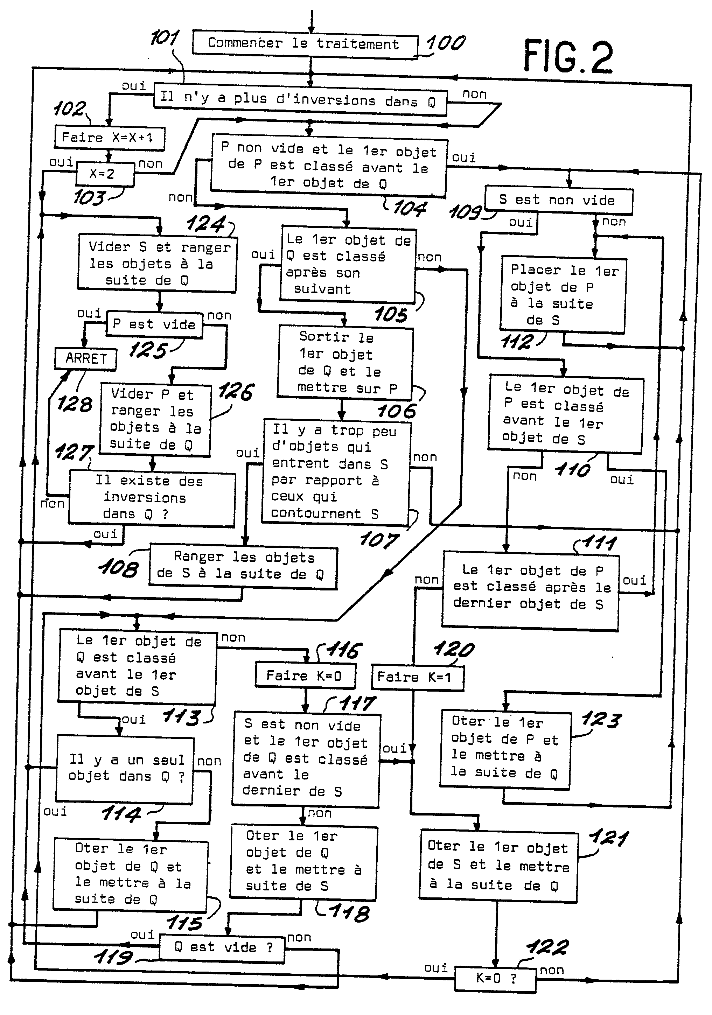

Pour expliquer le fonctionnement de ce dispositif on se référera au diagramme de la Figure 2 qui donne la liste des opérations effectuées et l'ordre dans lequel elles sont effectuées. On donnera ensuite un exemple de mise en oeuvre.

Le traitement illustré par l'organigramme de la Figure 2 comprend une suite d'interrogations (ou propositions) dont le contenu est libellé dans un rectangle à une entrée et deux sorties, l'une utilisée en cas de réponse affirmative, l'autre en cas de réponse négative et une suite d'opérations, dont le contenu est libellé dans un rectangle à une entrée et une sortie. Chacune des propositions et des opérations sont repérées par une référence numérique.

De façon plus précise, le calculateur de commande, par sa logique 68, est apte à dire si les propositions suivantes sont vraies ou fausses:

101: il n'y a plus d'inversions dans Q,
103: une variable auxiliaire X est égale à 2,
104: P est non vide et le premier objet de P est classé avant le premier objet de Q,
105: le premier objet de Q est classé après son suivant,
107: il y a trop peu d'objets qui entrent dans S par rapport à ceux qui contournent S,
109: S est non vide,
110: le premier objet de P est classé avant le premier objet de S,
111: le premier objet de P est classé après le dernier objet de S,
113: le premier objet de Q est classé avant le premier objet de S,
114: il y a un seul objet dans Q,
117: S est non vide et le premier objet de Q est classé avant le dernier de S,
119: Q est vide.

Le calculateur est également apte à commander les opérations suivantes:

100: commencer le traitement,
102: donner à une variable X la valeur 0 si la proposition 101 est fausse et incrémenter X d'une unité si la proposition est vraie,
106: sortir le premier objet de Q et le mettre sur P,
112: placer le premier objet de P à la suite de S,
115: ôter le premier objet de Q et le mettre à la suite de Q,
116: donner à une variable K la valeur 0,
118: ôter le premier objet de Q et le mettre à la suite de S,
120: donner à la variable K la valeur 1,
121: ôter le premier objet de S et le mettre à la suite de Q,
123: ôter le premier objet de P et le mettre à la suite de Q,
124: vider S et ranger les objets à la suite de Q,
128: arrêter le traitement.

Dans ces opérations, on notera l'apparition de deux variables auxiliaires X et K. La première sert à suivre l'évolution du nombre d'inversions dans la queue Q. Tant qu'il existe des inversions dans cette queue, X est maintenu à 0. La première fois que Q ne contient plus d'inversions, X est mis à 1. Mais le traitement n'est pas terminé pour autant, car il reste encore des objets dans P et S et il pourrait encore se manifester des inversions dans le regroupement des objets dans Q. Ce n'est donc qu'après avoir constaté une seconde fois qu'il n'y a plus d'inversions dans Q, que l'on fait passer X à 2, et que l'on s'achemine vers la fin du traitement (opérations 124, 125, 128).

Quant à la variable auxiliaire K, elle sert à commander l'aiguillage 122, qui intervient après l'opération 121 laquelle consiste à ôter le premier objet de S pour le mettre à la suite de Q. Cette variable permet de savoir si l'opération en question intervient après l'opération 113 ou après l'opération 111.

L'opération 107 est destinée à éviter le blocage de la queue S. En effet, si un objet de rang élevé venait à être classé en tête de S, très peu d'autres objets pourraient venir ensuite se ranger derrière cet objet, de sorte que la plupart des objets contourneraient le moyen S par la branche 30. Le calculateur évalue alors le pourcentage des objets qui contournent S par rapport à ceux qui sont rangés dans S; lorsque ce pourcentage prend une valeur jugée excessive, autrement dit lorsque trop peu d'objets entrent dans S, on procède au transfert des objets de S dans Q, (opération 108), ce qui vide S et permet ensuite sa réutilisation dans de meilleures conditions. La limite à ne pas dépasser dépend du traitement en cours. On peut calculer par exemple le quotient de la différence entre le nombre d'objets qui contournent S et le nombre d'objets qui entrent dans S par le nombre d'objets qui entrent dans S et décider que lorsque ce quotient sera par exemple supérieur à 2, il y aura "trop peu" d'objets qui entrent dans S. On procédera alors au vidage de S.

Le calculateur 60 est ainsi apte, par transferts de données numériques d'une zone mémoire à une autre, à ranger ces données dans la première zone mémoire 64Q et dans un ordre prédéterminé, par exemple dans un ordre croissant. Concommitamment, le calculateur délivre des signaux aptes à transférer les objets ayant lesdits codes d'un moyen de stockage à un autre, de telle sorte qu'en fin de traitement on trouve dans le premier moyen de stockage Q, les objets rangés dans l'ordre choisi. En quelque sorte, l'état du système de rangement 10 se trouve à chaque instant recopié dans la mémoire du calculateur, ce dernier ayant pour tâche d'ordonner les informations qu'il contient et de commander en conséquence l'état du système de rangement.

Pour mieux illustrer le fonctionnement du dispositif de l'invention, un exemple va être décrit. Il s'agit d'un cas volontairement simplifié en ce sens qu'il correspond au classement d'un petit nombre d'objets. Le passage à un nombre plus élevé d'objets est immédiat. Dans cet exemple, les objets seront identifiés par un code à quatre chiffres et il s'agit de classer ces objets dans l'ordre croissant de ce code.

L'état initial est défini par la suite d'objets suivante:

8684/7859/3730,6633/6425,7754,8810, 9168,9580/2258

Les barres obliques séparent des séries d'objets à l'intérieur desquelles les objets sont déjà classés correctement, ce qui peut résulter d'un classement préalable. Ces barres indiquent ainsi qu'il y a inversion dans l'ordre de classement entre les deux termes adjacents. Le problème consiste à ranger l'ensemble de cas 10 objets dans l'ordre croissant de leur code afin d'obtenir la suite ordonnée:

2258,3730,6425,6633,7754,7859,8684,8810, 9168,9580.

Les diverses étapes du processus sont indiquées ci-dessous. Les commandes effectuées sont données à chaque nouvelle opération ainsi que les états successifs des queues (dans Q et dans S) et de la pile (dans P):

QUEUE INITIALE:
8684/7859/3730 6633/6425 7754 8810 9168 9580/2258
COMMANDES:
AIGUILLAGE B AU REPOS. AIGUILLAGE A AU TRAVAIL. EXTRACTION DE Q. EMPILAGE DANS P
NOUVELLE QUEUE:
7859/3730 6633/6425 7754 8810 9168 9580/2258
NOUVELLE PILE:
8684
COMMANDES:
AIGUILLAGE B AU REPOS. AIGUILLAGE A AU TRAVAIL. EXTRACTION DE Q. EMPILAGE DANS P
NOUVELLE QUEUE:
3730 6633/6425 7754 8810 9168 9580/2258
NOUVELLE PILE:
7859 8684
COMMANDES:
AIGUILLAGE A AU REPOS. AIGUILLAGE B AU TRAVAIL. EXTRACTION DE Q. ENTREE DANS S
NOUVELLE QUEUE:
6633/6425 7754 8810 9168 9580/2258
NOUVEAU STOCK:
3730
COMMANDES:
AIGUILLAGE B AU REPOS. AIGUILLAGE A AU TRAVAIL. EXTRACTION DE Q. EMPILAGE DANS P
NOUVELLE QUEUE:
6425 7754 8810 9168 9580/2258
NOUVELLE PILE:
6633 7859 8684
COMMANDES:
AIGUILLAGE A AU REPOS. AIGUILLAGE B AU TRAVAIL. EXTRACTION DE Q. ENTREE DANS S
NOUVELLE QUEUE:
7754 8810 9168 9580/2258
NOUVEAU STOCK:
3730 6425

COMMANDES:
AIGUILLAGE A AU REPOS. AIGUILLAGE B AU TRAVAIL. DEPILAGE DE P. ENTREE DANS S
NOUVELLE PILE:
7859 8684
NOUVEAU STOCK:
3730 6425 6633
COMMANDES:
AIGUILLAGE A AU REPOS. AIGUILLAGE B AU TRAVAIL. EXTRACTION DE Q. ENTREE DANS S
NOUVELLE QUEUE:
8810 9168 9580/2258
NOUVEAU STOCK:
3730 6425 6633 7754
COMMANDES:
AIGUILLAGE AU REPOS. AIGUILLAGE A AU TRAVAIL. DEPILAGE DE P. ENTREE DANS S
NOUVELLE PILE:
8684
NOUVEAU STOCK:
3730 6425 6633 7754 7859
COMMANDES:
AIGUILLAGE A AU REPOS. AIGUILLAGE B AU TRAVAIL. DEPILAGE DE P. ENTREE DANS S
NOUVELLE PILE:
0
NOUVEAU STOCK:
3730 6425 6633 7754 7859 8684
COMMANDES:
AIGUILLAGE A AU REPOS. AIGUILLAGE B AU TRAVAIL. EXTRACTION DE Q. ENTREE DANS S
NOUVELLE QUEUE:
9168 9580/2258
NOUVEAU STOCK:
3730 6425 6633 7754 7859 8684 8810
COMMANDES:
AIGUILLAGE A AU REPOS. AIGUILLAGE B AU TRAVAIL. EXTRACTION DE Q. ENTREE DANS S
NOUVELLE QUEUE:
9580/2258
NOUVEAU STOCK:
3730 6425 6633 7754 7859 8684 8810 9168
COMMANDES:
AIGUILLAGE B AU REPOS. AIGUILLAGE A AU TRAVAIL. EXTRACTION DE Q. EMPILAGE DANS P
NOUVELLE QUEUE:
2258
NOUVELLE PILE:
9580
COMMANDES:
8 FOIS ENTREE DANS Q. EXTRACTION DE S. S EST VIDE NOUVELLE QUEUE:
2258 3730 6425 6633 7754 7859 8684 8810 9168
COMMANDES:
AIGUILLAGE B AU REPOS. ENTREE DANS Q. EXTRACTION DE P LA PILE EST VIDE
QUEUE DEFINITIVE:
2258 3730 6425 6633 7754 7859 8684 8810 9168 9580

Le classement est terminé.

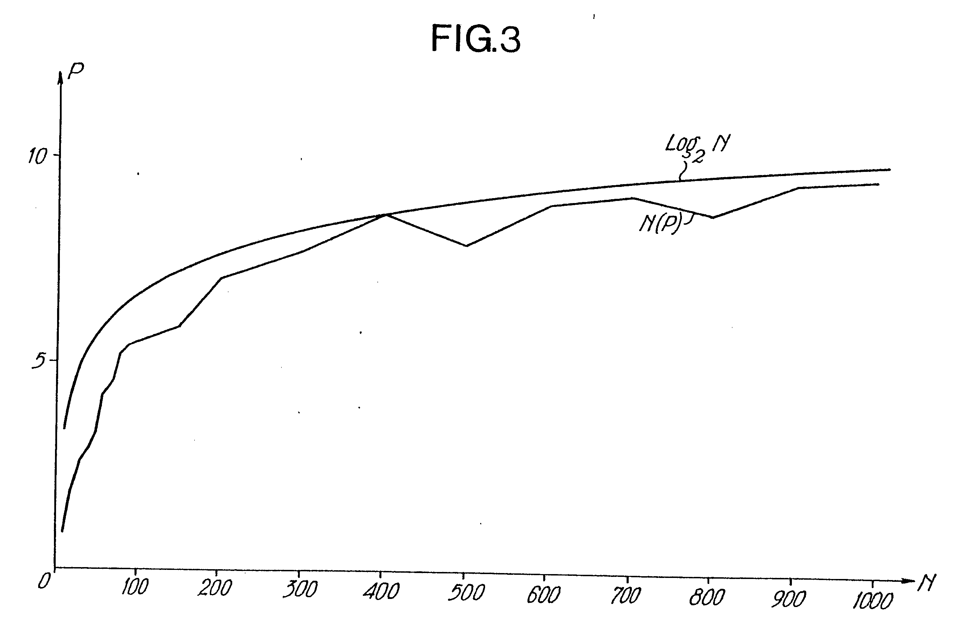

D'une façon générale, le demandeur a calculé le nombre de passages moyen P des objets dans le système de rangement, en fonction du nombre d'objets à traiter N. Les variations de cette fonction sont représentées sur la Figure 3 par ls courbe brisée N(P). On constate que cette courbe est située légèrement en-dessous de la courbe de variations du logarithme à base 2 du nombre d'objets ($\log_2 N$).

On observera que le nombre de passages est assez faible (pour 1000 objets, il reste inférieur à 10), ce qui montre l'efficacité du traitement mis en oeuvre.

La description qui précéde est valable quelle que soit la nature des objets à classer. Il peut s'agir par exemple de produits alimentaires, de colis, de pièces détachées, etc... Mais l'invention s'applique de préférence au cas du traitement du courrier postal, qu'il s'agit de classer en fonction de points de distribution.

Pour effectuer un classement de lettres, l'adresse du destinataire est d'abord traduite en un code de classement, généralement imprimé sous forme de barres fourescentes sur l'enveloppe de la lettre. Ce code de classement permet d'ordonner le flux de courrier dans l'ordre de la tournée des préposés à la distribution. Ce code assigne à chaque lettre un rang. Ce rang dépend de la suite des points de remise du courrier. Le classement à établir est ainsi un classement topologique en ce sens qu'il se réfère à un itinéraire qui est celui du préposé.

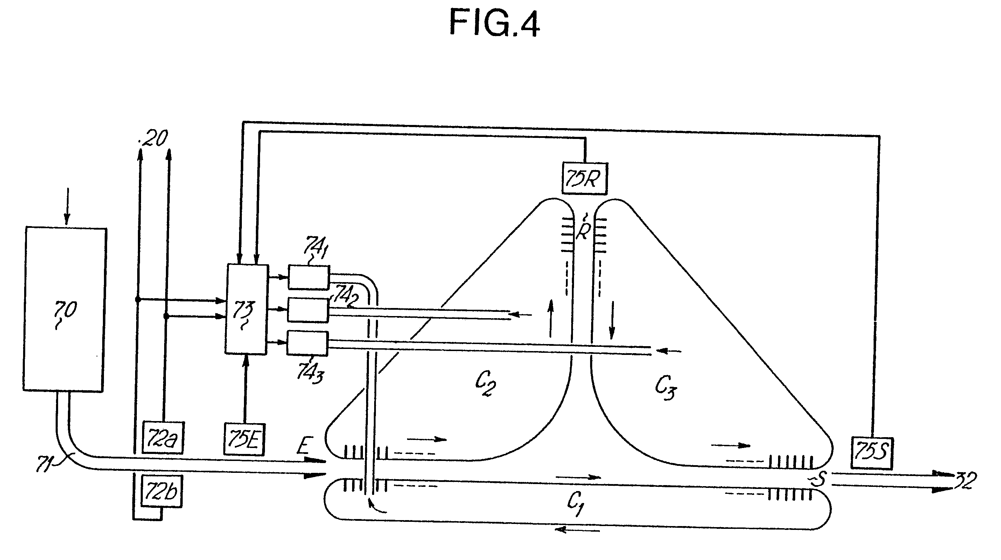

Dans cette application, les moyens de stockage Q, P, S sont des "tasseurs", c'est-à-dire des organes aptes à recevoir des lettres et à constituer des files organisées soit en queues (Q et S) soit en pile (P). Par ailleurs, toujours dans cette application particulière, un dispositif d'entrée un peu particulier peut être employé si l'on veut pouvoir effectuer le retournement de certaines lettres qui se présentent à l'envers en ce sens que, leurs bords supérieur et inférieur étant orientés correctement, ce sont les bords antérieur et postérieur qui sont intervertis, dans le déplacement de ces lettres dans leur plan, suivant la direction donnée par leurs bords supérier et inférieur. Ceci a pour conséquence que l'indexation de l'enveloppe est l'une "à l'envers" pour l'une des deux têtes de lecture et que la logique d'identification de cette indexation doit tenir compte de ce fait. Ce dispositif est illustré sur la Figure 4.

Tel que représenté, le dispositif comprend: un tasseur 70 chargé manuellement, un chemin de transport 71, une tête de lecture double 72a, 72b apte à lire le code matérialisé par les barres fluorescentes sur les enveloppes, un circuit de commande 73 relié à la tête de lecture double et enfin un dispositif de retournement. Ce dernier moyen comprend trois courroies perforées, en rotation permanente $C_1$, $C_2$, $C_3$, ces courroies ménageant entre elles trois couloirs. Trois dispositifs d'aspiration $74_1$, $74_2$, $74_3$, débouchent à l'intérieur du volume délimité par chaque courroie. Des ouvertures sont ménagées le long des trois couloirs dans les zones hachurées sur la Figure 4, créant ainsi une aspiration à travers les perforations des courroies.

Le sens de rotation des courroies est tel que pour l'un des couloirs (le couloir vertical sur la Figure 4) les courroies en regard ($C_2$, $C_3$) se déplacent en sens contraires. Pour les deux autres couloirs, les courroies ($C_1$, $C_2$) ($C_1$, $C_3$) se déplacent dans le même sens.

Le dispositif de retournement se complète par trois détecteurs situés à l'entrée E, à la sortie S et au point de rebroussement R, soit respectivement 75E, 75S, 75R. Ces trois détecteurs sont reliés à la logique de commande 73.

Le circuit 73 est apte à commander un seul des dispositifs d'aspiration $74_1$, $74_2$, $74_3$ à la fois, pour provoquer une aspiration à travers les ouvertures de la courroie correspondante. Une lettre qui se trouve au voisinage de cette courroie est alors appliquée sur celle-ci. Le retournement d'une lettre est obtenu par la commande successive des deux courroies tournant en sens inverses ($C_2$ et $C_3$) ce qui plaque d'abord la lettre contre $C_2$, puis contre $C_3$.

La double tête de lecture 72a et 72b permet de déterminer où se trouvent les barres fluorescentes de la lettre introduite et de savoir si celle-ci doit être retournée ou non. Si la lettre est dans le bon sens, le lecteur 72a est mis en action et la logique 73 commande le dispositif d'aspiration $74_1$ sur la courroie $C_1$. La lettre emprunte le couloir ménagé entre $C_1$ et $C_2$ puis entre $C_1$ et $C_3$. Son passage à l'entrée E et à la sortie S est noté par les détecteurs 75E et 75S.

Si la lettre introduite est à l'envers, le lecteur 72b est mis en action et la logique de commande 73 commande le dispositif d'aspiration $74_2$ sur la courroie $C_2$. Lorsque la lettre arrive à l'extrémité R, le détecteur 75R le signale, le dispositif $74_2$ est arrêté et le dispositif $74_3$ mis en marche. La lettre est alors aspirée contre la courroie $C_3$ et s'achemine vers la sortie S où elle se présente retournée par rapport à sa position d'entrée.

Dans un tel mode de réalisation, la double tête de lecture 72a, 72b constitue le dispositif de lecture référencé 50 sur la Figure 1 puisqu'elle délivre l'information permettant d'identifier l'objet à classer.

Pour finir, on observera que la dispositif que vient d'être décrit peut être utilisé en machine à trier. Le lot de courrier à traiter étant classé selon une suite croissante des indexations portées par les enveloppes, il est très aisé de réaliser un nombre totalement arbitraire de séparations dans ce courrier, en classant simplement, en même temps que les lettres, des intercalaires de papier, de couleur vive, aisément repérables dans le tasseur Q à la fin du traitement.

Ces intercalaires, portant des indexations "frontière", non utilisées par l'organisation postale de l'adressage, peuvent être rejoutés seulement au dernier moment, en un seul passage. Dans le cas des tris en cascade, ces intercalaires doivent être rajoutés au lot, dès le début du traitement.

Il est alors possible de considérer ces intercalaires comme les parois de cases de réception d'une machine à trier. On dispose ainsi d'une machine à trier dont le nombre de cases est absolument quelconque et dont le volume est variable avec le courrier à recevoir. Une telle machine est adaptable instantanément en nombre et en volume de séparations. En outre, elle est beaucoup moins encombrante que les machines à trier actuelles et demande beaucoup moins de manipulations pour son exploitation.

On peut souligner aussi que, dans le tri d'acheminement, le classement réalisé par le premier centralisateur au sein des lots qu'il expédie, bénéficie aux centralisateurs réceptionnaires, en accélérant leurs propres travaux de tri-classement.

En particulier, en mettant à l'envers dans le tasseur d'entrée, chaque première série d'un lot de trois pour utiliser au maximum la pile de la machine, le travail de tri-classement est considérablement accéléré.

**Revendications**

1. Dispositif de classement d'objets, marqués par un code, comprenant un système mécanique de rangement (10) de ces objets, commandé par un système électronique de traitement (20) de ces codes, caractérisé en ce que le système de rangement comprend:

A) un premier moyen de stockage d'objets (Q), organisé en queue, c'est-à-dire apte à faire sortir les objets dans l'ordre où ils sont entrés, ce moyen étant pourvu à cette fin d'un élément d'introduction (Qi) des objets dans la queue et d'un élément d'extraction (Qe) du premier objet de la queue,

B) un deuxième moyen de stockage d'objets (P), organisé en pile, c'est-à-dire apte à faire sortir les objets dans l'ordre inverse où ils sont entrés, ce moyen étant pourvu à cette fin d'un élément d'introduction (Pi) des objets sur la pile et d'un élément d'extraction (Pe) du premier objet de la pile,

C) un troisième moyen de stockage d'objets (S), organisé en queue, c'est-à-dire apte à faire sortir les objets dans l'ordre où ils sont entrés, ce moyen étant pourvu à cette fin d'un élément d'introduction (Si) des objets dans la queue et d'un élément d'extraction (Se) du premier objet de la queue,

D) un moyen de transport des objets à classer comprenant une branche d'introduction (30) disposée entre une entrée (32) et l'élément d'introduction (Qi) dans le premier moyen de stockage, une branche (34) entre l'élément d'extraction (Qe) de ce premier moyen et l'élément d'introduction (Pi) du deuxième moyen de stockage, cette branche comprenant un premier aiguillage A, une branche (36) entre le moyen d'extraction (Pe) du deuxième moyen de stockage (P) et l'élément d'introduction (Si) du troisième moyen de stockage (S), cette branche comprenant un deuxième aiguillage B, une branche (38) comprise entre le premier aiguillage (A) et le second (B), une branche (40) entre le second aiguillage et la branche d'introduction 30, une branche (42) entre l'élément d'extraction (Se) du troisième moyen de stockage (S) et la branche d'introduction 30,

et en ce que le système électronique de commande (20) comprend:

E) un moyen (50) de lecture d'un code numérique disposé sur les objets qui défilent sur la branche d'introduction (30),

F) un calculateur de commande (60) comprenant: ... - ..

a) un circuit tampon d'entrée (62) relié au moyen de lecture (50),

b) une mémoire (64) apte à recevoir les codes des différents objets introduits dans le système de rangement, cette mémoire comprenant une première zone (64Q) fonctionnant en queue selon la procédure "premier entré-premier sorti", une seconde zone (64P) fonctionnant en pile selon la procédure "dernier entré-premier sorti", une troisième zone (64S) fonctionnant en queue, une quatrième zone de mémoire, 64I, où est stockée l'information indiquant pour chacun des codes de la zone 64Q, s'il présente une inversion par rapport au code qui le suit immédiatement et une quatrième zone (64T) comprenant des instructions, les codes mémorisés étant rangés dans les trois zones mémoires (64Q, 64P, 64S) comme sont rangés dans les moyens de stockage (Q, P, S) respectivement les objets traités,

c) un circuit (66) de lecture des données et des instructions stockées dans la mémoire (64),

d) une unité logique (68) exécutant les instructions et apte à commander le transfert des codes d'une zone mémoire à une autre afin de ranger les codes dans un ordre déterminé dans la première zone mémoire et pour délivrer des ordres de commande aptes à déplacer les objets correspondant à ces codes d'un moyen de stockage à un autre pour obtenir finalement, dans le premier moyen de stockage les objets rangés dans l'ordre souhaité, l'unité logique (68) du calculateur étant apte à dire si au moins l'une des propositions suivantes est vraie ou fausse:

(101): il n'y a plus d'inversion dans Q,

(103): une variable auxiliaire (X) est égale à 2,

(104): P est non vide et le premier objet de P est classé avant le premier objet de Q,

(105): le premier objet de Q est classé après son suivant,

(107): il y a trop peu d'objets qui entrent dans S par rapport à ceux qui contournent S,

(109): S est non vide,

(110): le premier objet de P est classé avant le premier objet de S,

(111): le premier objet de P est classé après le dernier objet de S,

(113): le premier objet de Q est classé avant le premier objet de S,

(114): il y a un seul objet dans Q,

(117): S est non vide et le premier objet de Q est classé avant le dernier de S,

(119): Q est vide,

l'unité logique (68) du calculateur étant également apte à commander au moins l'une des opérations suivantes:

(100): commencer le traitement,

(102): donner à une variable X la valeur 0 si la proposition (101) est fausse et incrémenter X d'une unité si la proposition est vraie,

(106): sortir le premier objet de Q et le mettre sur P,

(112): placer le premier objet de P à la suite de S,

(115): ôter le premier objet de Q et le mettre à la suite de Q,

(116): donner à une variable K la valeur 0,

(118): ôter le premier objet de Q et le mettre à la suite de S,

(120): donner à la variable K la valeur 1,

(121): ôter le premier objet de S et le mettre à la suite de Q,

(123): ôter le premier objet de P et le mettre à la suite de Q,

(124): vider S et ranger les objets à la suite de Q,

(128): arrêter le traitement,

les instructions stockées dans la quatrième zone (64T) étant aptes à enchaîner ces propositions et ces opérations comme indiqué sur l'organigramme de Figure 2 des dessins annexés,

e) un circuit tampon de sortie (69) relié à l'unité logique (68) et possédant huit sorties reliées aux éléments d'introduction (Qi, Pi, Si) aux éléments d'extraction (Qe, Pe, Se) et aux deux aiguillages (A, B).

2. Dispositif selon la revendication 1, caractérisé en ce que les objets à classer étant du genre lettres, il comprend en outre un dispositif de retournement comprenant trois courroies perforées ($C_1$, $C_2$, $C_3$) en rotation permanente ménageant entre elles trois couloirs, chaque courroie étant munie d'un dispositif d'aspiration ($74_1$, $74_2$, $74_3$) à travers des ouvertures ménagées le long des trois couloirs, les sens de rotation des courroies étant tels que pour l'un des couloirs les courroies en regard ($C_2$, $C_3$) se déplacent en sens contraires et que pour les deux autres couloirs, les courroies ($C_1$, $C_2$) ($C_1$, $C_3$) se déplacent dans le même sens, le dispositif comprenant en outre un organe logique (73) apte à commander un seul des dispositifs d'aspiration à la fois, pour provoquer une aspiration et une application d'une lettre sur la courroie correspondante, le retournement d'une lettre étant obtenu par la commande successive des deux courroies tournant en sens inverses.

**Patentansprüche**

1. Einrichtung zum Klassieren von Gegenständen, die durch einen Kode markiert sind, enthaltend ein mechanisches Zuweisungssystem (10) für diese Objekte, das von einem elektronischen System (20) zur Verarbeitung dieser Kodes gesteuert ist, dadurch gekennzeichnet, daß das Zuweisungssystem enthält:

A) eine erste Einrichtung zur Speicherung von Objekten (Q), die im Umlauf organisiert ist, d.h., sie ist geeignet, die Objekte in der Reihenfolge austreten zu lassen, wie sie eingetreten sind, wobei diese Einrichtung zu diesem Zweck mit einem Element (Qi) zum Einführen der Objekte in den Umlauf und mit einem Element (Qe) zum Herausführen des ersten Objekts aus dem Umlauf versehen ist,

B) eine zweite Einrichtung zum Speichern von Objekten (P), die als Stapel organisiert ist, d.h., sie ist dazu eingerichtet, die Objekte in umgekehrter Reihenfolge in bezug auf ihren Eintritt austreten zu lassen, wobei diese Einrichtung zu diesem Zweck mit einem Element (Pi) zum Einführen der Objekte auf den Stapel und mit einem Element (Pe) zum Herausnehmen des ersten Objekts von dem Stapel versehen ist,

C) eine dritte Einrichtung zum Speichern von Objekten (S), die im Umlauf organisiert ist, d.h., sie ist dazu eingerichtet, die Objekte in der gleichen Reihenfolge austreten zu lassen, wie sie eingetreten sind, wobei diese Einrichtung zu diesem Zweck mit einem Element (Si) zum Einführen der Objekte in den Umlauf und mit einem Element (Se) zum Herausführen des ersten Objektes aus dem Umlauf versehen ist,

D) eine Transporteinrichtung für die zu klassierenden Objekte, enthaltend einen Einführzweig (30), der zwischen dem Eingang (32) und dem Einführelement (Qi) in der ersten Speichereinrichtung angeordnet ist, einen Zweig (34) zwischen dem Ausleitelement (Qe) und dem ersten Einführelement (Pi) der zweiten Speichereinrichtung, wobei dieser Zweig einen ersten Verteiler (A) aufweist, einen Zweig (36) zwischen der Ausleiteinrichtung (Pe) der zweiten Speichereinrichtung (P) und dem Einfürelement (Si) der dritten Speichereinrichtung (S), wobei dieser Zweig einen zweiten Verteiler (B) enthält, einen Zweig (38) zwischen der ersten Verzweigung (A) und der zweiten (B), einen Zweig (40) zwischen der zweiten Verzweigung und dem Einführzweig (30), einen Zweig (42) zwischen dem Ausleitelement (Se) der dritten Speichereinrichtung (S) und dem Einführzweig (30),

und daß das elektronische Steuersystem (20) enthält:

E) eine Einrichtung (50) zum Lesen des numerischen Kodes, der auf den Objekten angeordnet ist, die auf dem Einführzweig (30) wandern,

F) einen Steuerrechner (60), enthaltend:

a) einen Eintrittspufferkreis (62), der mit der Leseeinrichtung (50) verbunden ist,

b) einen Speicher (64), der dazu eingerichtet ist, die Kodes der unterschiedlichen Objekte aufzunehmen, die in das Zuweisungssystem eingeführt sind, wobei dieser Speicher eine erste Zone (64Q) aufweist, die im Umlaufbetrieb nach dem Verfahren "erster Eingang—erster Ausgang" arbeitet, eine zweite Zone (64P), die im Stapelbetrieb nach dem Varfahren "letzter Eingang—erster Ausgang" arbeitet, eine dritte Zone (64S), die im Umlaufbetrieb arbeitet, eine vierte Speicherzone (64I), in der die Information gespeichert wird, die für jeden der Kodes der Zone 64Q anzeigt, ob sie eine Umkehrung gegenüber dem Kode zeigt, der ihm unmittelbar folgt, und eine vierte Zone (64T), die Befehle enthält, wobei die gespeicherten Kodes in die drei Speicherzonen (64Q, 64P, 64S) zugewiesen sind, wie sie in den Speichereinrichtungen (Q, P, S) entsprechend der behandelten Objekte zugewiesen sind,

c) einen Kreis (66) zum Lesen der Vorgaben und der in dem Speicher (64) gespeicherten Befehle,

d) eine Logikeinheit (68), die die Befehle ausführt und dazu eingerichtet ist, die Übertragung der Kodes von einer Speicherzone zu einer anderen zu steuern, um die Kodes in einer Reihenfolge zu ordnen, die von der ersten Speicherzone bestimmt ist und um Steuerbefehle zu liefern, die dazu geeignet sind, die Objekte entsprechend dieser Kodes von einer Speichereinrichtung auf eine andere Speichereinrichtung zu verschieben, um schließlich in der ersten Speichereinrichtung die Objekte in der gewünschten Reihenfolge anzuordnen, wobei die Logikeinheit (68) des Rechners dazu eingerichter ist, darüber auszusagen, ob wenigstens einer der nachfolgenden Theoreme wahr oder falsch ist:

(101): es gibt keine Umkehrung mehr in Q,
(103): eine variable Hilfsgröße (X) gleich 2,
(104): P ist nicht leer und das erste Objekt von P ist von dem ersten Objekt von Q klassiert,
(105): das erste Objekt von Q ist nach seinem Folgenden klassiert,
(107): es gibt zu wenig Objekte, die in S eintreten gegenüber jenen, die in S umlaufen,
(109): S ist nicht leer,
(110): das erste Objekt von P ist vor dem ersten Objekt von S klassiert,
(111): das erste Objekt von P ist nach dem letzten Objekt von S klassiert,
(113): das erste Objekt von Q ist vor dem ersten Objekt von—S klassiert,
(114): es gibt nur ein einziges Objekt in Q,
(117): S ist nicht leer und das erste Objekt von Q ist vor dem letzten von S klassiert,
(119): Q ist leer,

wobei die Logikeinheit (68) des Rechners auch dazu geeignet ist, wenigstens eine der nachfolgenden Operationen zu befehlen:

(100): Beginn der Behandlung,
(102): Ausgeben einer Variablen X des Wertes 0, wenn das Theorem (101) falsch ist, und Erhöhen von X um eine Einheit, wenn das Theorem wahr ist,
(106): Ausleiten des ersten Objekts aus Q und Aufgeben auf P,
(112): Plazieren des ersten Objekts von P an die Folge von S,
(115): Entfernen des ersten Objekts von Q und Setzen an die Folge von Q,
(116): Ausgeben einer Variablen K des Wertes 0,
(118): Entfernen des ersten Objektes von Q und Setzen an die Folge von S,
(120): Abgeben einer Variablen K des Wertes 1,
(121): Entfernen des ersten Objekts von S und Setzen an die Folge von Q,
(123): Entfernen des ersten Objekts von P und Setzen an die Folge von Q,
(124): Entleeren von S und Zuweisen der Objekte an die Folge von Q,
(128): Anhalten der Verarbeitung,

wobei die Befehle, die in der vierten Zone (64T) gespeichert sind, dazu eingerichtet sind, diese Theoreme und diese Operationen zu verketten, wie in dem Flußdiagramm der Fig. 2 der beigefügten Zeichnungen angegeben,

e) einen Ausgangspufferkreis (69), der mit der Logikeinheit (68) verbunden ist und acht Ausgänge hat, die mit den Einführelementen (Qi, Pi, Si), den Ausleitelementen (Qe, Pe, Se) und den zwei Verzweigungen (A, B) verbunden ist.

2. Einrichtung nach Anspruch 1, dadurch gekennzeichnet, daß die zu klassierenden Objekte von der Art von Briefen sind und weiterhin eine Rückführeinrichtung aufweist, enthaltend drei perforierte Förderbänder ($C_1$, $C_2$, $C_3$), die ständig umlaufen und zwischen sich drei Kanäle ausbilden, wobei jedes Förderband mit einer Saugeinrichtung ($74_1$, $74_2$, $74_3$) mit Öffnungen versehen ist, die längs der drei Kanäle ausgebildet sind, wobei die Umlaufrichtungen der Förderbänder derart sind, daß für einen der Kanäle die sich gegenüberstehenden Förderbänder ($C_2$, $C_3$) sich gegenläufig bewegen und für die zwei anderen Kanäle die Förderbänder ($C_1$, $C_2$), ($C_1$, $C_3$) sich in übereinstimmender Richtung bewegen, die Einrichtung weiterhin ein Logikorgan (73) aufweist, das dazu eingerichtet ist, jeweils eine einzige der Saugeinrichtungen zu steuern, um eine Saugwirkung und eine Anlage eines Briefes an dem entsprechenden Förderband hervorzurufen, wobei man eine Rückkehr eines Briefes durch nachfolgende Steuerung der zwei gegensinnig umlaufenden Förderbänder erhält.

**Claims**

1. Apparatus for the classification of objects marked with a code, comprising a mechanical ranking system (10) for said objects, controlled by an electronic code-processing system (20), characterised in that the ranking system comprises:

A) a first object store (Q), organised in a queue, i.e. adapted to sort the objects in the order in which they enter, said store being provided for this purpose with an introduction member (Qi) for objects into the queue and an extraction member (Qe) for the first object in the queue,

B) a second object store (P), organised as stack, i.e. adapted to sort the objects in the reverse order to that in which they enter, said store being provided for that purpose with an introduction member (Pi) for objects into the stack, and an extraction member (Pe) for the first object in the stack,

C) a third object store (S), organised as a queue, i.e. adapted to sort the objects in the order in which they enter, said store being provided for this purpose with an introduction member (Si) for objects into the queue and an extraction member (Se) for the first object in the queue,

D) a transport means for objects to be classified comprising an entry track (30) located between an input (32) and the introduction member (Qi) for the first store, a track (34) between the extraction element (Qe) of the first store and the introduction member (Pi) of the second store, said track comprising a first switch (A), a track (36) between the extraction member (Pe) of the second store (P) and the introduction member (Si) of the third store (S), said track comprising a second switch (B), a track (38) between the first switch (A) and the second switch (B), a track (40) between the second switch and the entry track (30), a track (42) between the extraction member (Se) of the third store (S) and the entry track (30), and in that the electronic control system (20) comprises:

E) a reading means (50) for a digital code located on the objects which pass over the entry track (30),

F) a control calculator (60) comprising:

a) an inlet inspection circuit (62) connected to the reading means (50),

b) a memory (64) adapted to receive the codes of different objects introduced into the ranking system, said memory comprising a first zone (64Q) operating in queue according to the "first in—first out" procedure, a second zone (64P) operating in stack, according to the "last in—first out" procedure, a third zone (64S) operating in queue, a fourth memory zone (64I) in which is stored the information indicating for each code in the zone (64Q) whether it exhibits an inversion with respect to the code immediately following, and a fourth zone (64T) comprising instructions, the memorised codes being ranked in the three memory zones (64Q, 64P, 64S) as they are ranked in the respective stores (Q, P, S) for treated objects.

c) a reading circuit (66) for data and instructions stored in the memory (64),

d) a logic unit (68) executing instructions and adapted to control transfer of the codes from one memory zone to another whereby to rank the codes in a predetermined order in the first memory zone and to deliver control instructions adapted to move the objects corresponding to said codes from one store to another to obtain finally, in the first store, the objects ranked in the desired order, the logic unit (68) of the calculator being adapted to indicate if at least one of the following propositions is true or false:

(101): there is no inversion in Q,
(103): an auxiliary variable (X) equals 2,
(104): P is not empty and the first object in P is classified before the first object in Q,
(105): the first object in Q is classified after the one following,
(107): there are too few objects entering S with respect to those passing S,
(109): S is not empty,
(110): the first object in P is classified before the first object in S,
(111): the first object in P is classified after the last object in S,
(113): the first object in Q is classified before the first object in S,

(114): there is a single object in Q,
(117): S is not empty and the first object in Q is classified before the last object in S,
(119): Q is empty,

the logic unit (68) of the calculator being also adapted to command at least one of the following operations:

(100): start processing,
(102): assign the value zero to a variable X if the proposition (101) is false, and to increase X by one unit if the proposition is true,
(106): take the first object in Q and place it in P,
(112): place the first object in P after S,
(115): take the first object from Q and place it after Q
(116): assign the value zero to a variable K,
(118): take the first object from Q and place it after S
(120): assign the value 1 to the variable K,
(121): take the first object from S and place it after Q
(123): take the first object from P and place it after Q
(124): empty S and rank the objects after Q,
(128): cease processing,

the instructions stored in the fourth zone (64T) being adapted to carry out in sequence the propositions and operations as indicated in the organigram of Figure 2 of the attached drawings,

e) an output inspection circuit (69) connected to the logic unit (68) and having 8 outputs connected respectively to the introduction members (Qi, Pi, Si), to the extraction members (Qe, Pe, Se), and to the two switches (A, B).

2. Apparatus according to Claim 1, characterised in that, the objects to be classified being in sheet form, it additionally comprises a return system comprising three permanently rotating perforated endless belts ($C_1, C_2, C_3$) forming three channels between them, each belt having an aspiration system ($74_1, 74_2, 74_3$) operating through the openings formed lengthwise of the three channels, the belts rotating in senses such that for one of the channels, the facing belts ($C_2, C_3$) move in contrary senses and that for the two other channels, the belts ($C_1, C_2$) ($C_1, C_3$) move in the same sense, the apparatus additionally comprising a logic means (73) adapted to command a single aspiration system at a time, to produce aspiration and application of a sheet to the corresponding belt, the return of a sheet being produced by successive command of two belts turning on opposite senses.

# FIG.1

0 092 460

Commencer le traitement 100

FIG.2

101

102 oui — Il n'y a plus d'inversions dans Q — non

Faire X=X+1

103 oui — X=2 — non

P non vide et le 1er objet de P est classé avant le 1er objet de Q — oui — 104

109 S est non vide

124 non

Vider S et ranger les objets à la suite de Q

oui — Le 1er objet de Q est classé après son suivant — non — 105

oui — S est non vide — non

Placer le 1er objet de P à la suite de S — 112

oui — P est vide — non — 125

ARRET

Sortir le 1er objet de Q et le mettre sur P — 106

Le 1er objet de P est classé avant le 1er objet de S — 110

128

Vider P et ranger les objets à la suite de Q — 126

Il y a trop peu d'objets qui entrent dans S par rapport à ceux qui contournent S — oui / non — 107

non — oui

127

Il existe des inversions dans Q ? — non

oui

111

Le 1er objet de P est classé après le dernier objet de S — non / oui

108 Ranger les objets de S à la suite de Q

Le 1er objet de Q est classé avant le 1er objet de S — non — 116

Faire K=0 — 120 Faire K=1

113 oui

117 S est non vide et le 1er objet de Q est classé avant le dernier de S — oui

123 Oter le 1er objet de P et le mettre à la suite de Q

Il y a un seul objet dans Q ? — non

114 oui

non

Oter le 1er objet de Q et le mettre à la suite de S — 115

Oter le 1er objet de Q et le mettre à suite de S — 118 non

121 Oter le 1er objet de S et le mettre à la suite de Q

119 oui — Q est vide ? — non

122 oui — K=0 ? — non

3

FIG.3

0 092 460

# FIG.4

0 092 460